# EUROPÄISCHE PATENTSCHRIFT

(11) **EP 3 132 091 B1**
(45) Veröffentlichungstag und Bekanntmachung des Hinweises auf die Patenterteilung: **15.11.2017**
(21) Anmeldenummer: 15744848.1
(22) Anmeldetag: 14.04.2015
(51) Int. Cl.: D21F 1/52

(54) **ENTWÄSSERUNGSELEMENT MIT INSERT**
DRAINAGE ELEMENT COMPRISING AN INSERT
ÉLÉMENT DE DÉSHYDRATATION PRÉSENTANT UN INSERT

(30) Priorität: 15.04.2014 AT 502822014
(43) Veröffentlichungstag der Anmeldung: 22.02.2017
(73) Patentinhaber: Röchling Leripa Papertech GmbH & Co. KG, 4151 Öpping (AT)
(72) Erfinder: KEINBERGER, Rüdiger, 4160 Aigen (AT); ECKERSTORFER, Peter, 4161 Ulrichsberg (AT); ECKER, Markus, 4151 Oepping (AT); ECKERSTORFER, Roland, 4151 Oepping (AT)
(74) Vertreter: Burgstaller, Peter
(86) Internationale Anmeldenummer: PCT/AT2015/050094
(87) Internationale Veröffentlichungsnummer: WO 2015/157787

(56) Entgegenhaltungen:
- DE-A1- 1 761 174
- DE-U1- 8 714 492
- US-A- 3 365 359
- US-A- 3 404 066
- US-B1- 6 254 729

## Beschreibung

Die Erfindung betrifft ein Entwässerungselement aus Kunststoff, welches Inserts, insbesondere Keramikinserts aufweist.

Ein Entwässerungselement wird in Papiermaschinen sowie Karton-, Zellstoff- und Tissuemaschinen zur Entwässerung der Fasersuspension verwendet. Das gegenständliche Insert bzw. Keramikinsert findet insbesondere bei Entwässerungselementen von Saugkästen (Vakuumsaugern, Unterdrucksaugern) Verwendung. Das Entwässerungselement bildet die obere Deckfläche (den Deckel, die Abdeckung) des Saugkastens und wird im Englischen als "Suction box cover" bezeichnet. Das Entwässerungselement weist zur Befestigung an seiner untern Seite in der Regel zwei oder mehr Nuten zur Aufnahme von T-Schienen des Saugkastens auf.

Der Saugkasten ist ein Teil der Siebpartie der Papiermaschine. In der Siebpartie wird die Fasersuspension auf die obere Seite eines umlaufenden endlosen Siebs aus Kunststoff oder Metall aufgebracht. Dieses Sieb gleitet mit seiner Unterseite über das Entwässerungselement. Das Entwässerungselement weist Öffnungen auf, durch welche mittels Anlegen von Unterdruck der Fasersuspension durch das Sieb hindurch Flüssigkeit entzogen wird.

Da das Sieb durch den Unterdruck gegen das Entwässerungselement gedrückt wird, muss das Entwässerungselement äußerst glatt und verschleißbeständig ausgeführt sein, um Verschleiß am Sieb und am Entwässerungselement selbst zu minimieren.

Daher sind für Entwässerungselemente sehr harte Materialien am besten geeignet. Nach dem Stand der Technik ist es bekannt, Entwässerungselemente zur Gänze aus Keramik oder zur Gänze aus Kunststoff wie glasfaserverstärkter Kunststoff (GFK) zu fertigen, oder beispielsweise aus Stahl mit Keramikbeschichtung. Es ist auch bekannt Keramikleisten oder Keramiksegmente auf einem Träger, insbesondere auf länglichen T-Schienen aus Kunststoff oder Stahl, zu befestigen.

Besonders vorteilhaft hat sich jedoch der Lochbelag für Entwässerungselemente erwiesen, bei welchem das Entwässerungselement selbst viele Öffnungen aufweist, da so die bestmögliche Entwässerung erreicht wird, da beim Lochbelag im Vergleich zu anderen Designs die offene Fläche, an der Vakuum anliegen kann, am höchsten ist und der Lochbelag ein gleichmäßigeres und schonenderes Entwässerungsprofil aufweist.

Das Lochdesigne kann durch Öffnungen in einer zur Gänze aus Keramik oder zur Gänze aus Kunststoff bestehenden Oberfläche des Entwässerungselements vorgesehen sein.

Die Keramik-Ausführung hat den Vorteil, dass aufgrund der hohen Härte und der äußerst glatten Oberfläche der Verschleiß minimal ist. Die Keramik-Ausführung hat den Nachteil, dass große Elemente aus Keramik schwierig zu produzieren und teuer sind, zudem muss bei einer Beschädigung des Elements das ganze Element ersetzt werden.

Die Kunststoff-Ausführung hat den Vorteil, dass diese günstiger und in der Herstellung einfacher ist, mit dem Nachteil, dass sie eine geringere Härte und somit mehr Verschleiß aufweist als die Keramik-Ausführung.

Daher wurden Entwässerungselemente entwickelt, welche Oberflächenbereiche aus unterschiedlichen Materialien, insbesondere Kunststoff und Keramik aufweisen, um deren Vorteile zu kombinieren.

Die US 3404066 A zeigt ein Entwässerungselement, das aus einer Platte aus Hartholz besteht und welches den Saugkasten zur Gänze abdeckt. Die Platte ist mit Bohrungen versehen, welche zum Durchtritt von Flüssigkeit in den Saugkasten dienen. Um den Verschleiß an den Lochkanten der Hartholzplatte zu minimieren, wird vorgeschlagen, hohlzylindrische Keramikinserts (bzw. allgemein Inserts mit einer hohen Härte, oder mit hartem Material beschichtete Inserts) in diese Bohrungen einzusetzen. Dazu weisen die Bohrungen zwei zylindrische Bereiche auf, wobei der zylindrische Bereich, welcher dem Sieb zugewandt liegt den gleichen Durchmesser hat wie der Hohlzylinder des Keramikinserts, und der untere zylindrische Bereich den gleichen Durchmesser hat, wie der Innendurchmesser des Keramikinserts. Das Keramikinsert wird mit einem Epoxid-Kleber in der Bohrung befestigt. Dieses Dokument offenbart die Merkmale des Oberbegriffs des vorliegenden Anspruchs 1.

Die CA 2273674 A1 zeigt ein Entwässerungselement, welches aus einer Platte aus Kunststoff, bevorzugt Polyethylen besteht. Die Platte weist Öffnungen, insbesondere längliche Öffnungen auf. Diese Öffnungen sind an ihrem oberen Umfang mit einem endlosen Band aus härterem Material, insbesondere Keramik versehen, sodass dieses Material die obere Kante der Öffnung bildet, wobei diese Kante bevorzugt abgerundet ausgeführt ist. Das endlose Band selbst weist bevorzugt einen quadratischen Querschnitt auf, wobei sich bei einem kreisrunden Querschnitt der Öffnungen eine Keramikhülse wie bei der zuvor zitierten US 3404066 A ergibt. Das endlose Band kann auch einen runden, ovalen, oder trapezförmigen Querschnitt aufweisen.

Die DE 1761174 A1 zeigt ein Entwässerungselement aus Kunststoff, welches unterschiedliche Keramikinserts aufweisen kann. Dabei kommen Inserts, welche eine Öffnung im Entwässerungselement umschließen und längliche Inserts, welche in das Material des Kunststoffs eingebettet sind zum Einsatz. Die Inserts, welche die Öffnungen umschließen, sind im Wesentlichen gemäß den vorgenannten Schriften ausgebildet. Die länglichen Inserts sind prismatisch mit einer trapezförmigen Grundfläche ausgeführt, wobei die kleinere der beiden parallelen Seitenflächen des trapezförmigen Prismas nach oben zeigt, sodass die Inserts formschlüssig vom Kunststoff umschlossen werden. Zur Herstellung des Entwässerungselements mit Öffnungen wird vorgeschlagen, die die Öffnungen umschließenden Inserts am Boden einer Guss- oder Sinterform zu platzieren und diese mit Kunststoff zu umschließen. Um die Inserts höhenverstellbar auszuführen, wird vorgeschlagen hohlzylindrische Inserts mit einem Gewinde zu versehen und von dieser Form abweichende Inserts verschiebbar in den Öffnungen zu halten.

Nachteilig am Stand der Technik ist, dass die Inserts entweder rein durch die Schwerkraft, bzw. die Sogwirkung, durch Kleben oder Verschrauben in den Öffnungen gehalten werden. Bei der Methode der Schwerkraft ist nachteilig, dass die Insert speziell beim Transport oder bei Demontage des Entwässerungselements aus den Öffnungen fallen können. Nachteilig am Kleben ist, dass die Inserts nicht oder nur mit hohem Aufwand wieder vollständig aus dem Entwässerungselement entfernt werden können. Nachteilig am verschrauben ist, dass die Inserts, bzw. das Entwässerungselement aufwendig zu bearbeiten sind, da zusätzliche Öffnungen, Aufnahmen und Befestigungen für die Schrauben vorhanden sein müssen. Da die Schrauben in der Regel nur von der Unterseite des Entwässerungselements zugänglich sind, ist eine Demontage des Inserts kompliziert.

Beim Umgießen der Inserts mit Kunststoff in einer Form ist es zwar möglich die Inserts formschlüssig einzubetten, dies und das Herstellungsverfahren weisen jedoch nicht unwesentliche Nachteile auf. Durch die formschlüssige Einbettung durch Umgießen mit Kunststoff können die Inserts nicht getauscht werden, wenn diese beschädigt, oder verschlissen sind. Beim Versehen der Inserts mit einem Gewinde ist die Tauschbarkeit zwar gegeben, aber das Insert weist dabei eine komplexe Form auf und durch Vibrationen und Reibkräfte des Siebes kann es zu einer ungewollten Höhenverstellung kommen.

Das Herstellungsverfahren, bestehend aus dem Platzieren der Inserts in einer Guss- oder Sinterform und das folgende Umschließen mit Kunststoff, hat den wesentlichen Nachteil, dass aufgrund der Fremdkörper in der Form ein gleichmäßiges Aushärten des Kunststoffs erschwert wird, was zu Spannungen im Kunststoffelement und/oder den Inserts führen kann, was sich negativ auf die Lebensdauer des Entwässerungselements bzw. der Inserts auswirkt. Zudem sind aufwendige Gussformen nötig, da Halteelemente zum Fixieren der Inserts in der Gussform benötigt werden.

Die der Erfindung zu Grunde liegende Aufgabe besteht darin, eine formschlüssige Verbindung der Inserts im Kunststoff des Entwässerungselements zu erreichen, unter Vermeidung der oben genannten Nachteile.

Für das Lösen der Aufgabe wird vorgeschlagen, die Inserts mit zumindest einem Rastelement, welches die Wirkung eines Widerhakens oder ähnlich einem Widerhaken hat, zu versehen, wobei das Rastelement bei Einstecken des Inserts mit einer Rastfläche in der Öffnung des Entwässerungselements in Eingriff kommt.

Das erfindungsgemäße Verfahren zur Herstellung eines spannungsfreien Entwässerungselements mit formschlüssig befestigten Keramikinserts besteht darin, dass in einem ersten Schritt eine Platte aus Kunststoff, bevorzugt ultrahochmolekularem Polyethylen, gesintert wird.

Diese Platte wird in Folge durch einen spanenden Bearbeitungsprozess, insbesondere Fräsen und/oder Bohren, mit Öffnungen versehen. Die Öffnungen weisen an einem von der Oberfläche der Platte entfernt liegenden Bereich einen Teilabschnitt mit größerem Querschnitt, bzw. einem größerem Durchmesser auf. Die nach bekannten Verfahren (z.B. Sintern mit eventuell nachfolgendem Schleifen) hergestellten Keramikinserts weisen in einem von beiden Deckflächen des Inserts beabstandet liegenden Bereich eine vergrößerten Querschnitt bzw. Durchmesser auf. Der vergrößerte Querschnitt bzw. Durchmesser des Inserts ist etwas größer als der Querschnitt bzw. Durchmesser des Teilbereichs der Öffnung, welcher an den Teilabschnitt der Öffnung mit größerem Querschnitt bzw. Durchmesser in Richtung der Oberfläche der Platte anschließt.

Je ein Insert wird in je eine Öffnung des Entwässerungselements geschoben bzw. eingepresst, bis der vergrößerte Bereich des Inserts mit dem vergrößerten Bereich der Öffnung in Eingriff kommt. Das Insert ist in jenem Teilbereich, welcher sich in der Öffnung befindet, an seiner Mantelfläche, bzw. seinen Mantelflächen allseitig vom Kunststoff des Entwässerungselements umschlossen.

Vorteilhaft an der gegenständlichen Erfindung ist, dass
- das Entwässerungselement aus einer spannungsfrei gefertigten Kunststoffplatte besteht,
- die Inserts formschlüssig in die Öffnungen des Entwässerungselements einsteckbar sind,
- die Inserts gegen Herausfallen und vertikales Verschieben gesichert sind
- und dennoch ein rasches Auswechseln einzelner Inserts möglich ist.

Bevorzugt weist das Insert an jener Oberfläche mit der es mit dem Sieb in Kontakt kommt eine Keramikbeschichtung oder einen Keramikeinsatz auf, wobei das restliche Insert beispielsweise aus Stahl besteht.

Besonders bevorzugt besteht das Insert zur Gänze aus technischer Keramik.

Bevorzugt erstrecken sich die Öffnungen durch die gesamte Dicke des Entwässerungselements.

Bevorzugt erstrecken sich die Öffnungen in einem Winkel von 90° zur Oberfläche durch das Entwässerungselement.

Bevorzugt weist das Insert selbst eine Öffnung auf, welche sich über die gesamte Länge des Inserts erstreckt.

Bevorzugt ist die Länge des Inserts geringer als die Dicke des Entwässerungselements.

Bevorzug weisen die Öffnungen und die Inserts nur kreisförmige Querschnitte auf.

Bevorzugt ist das Entwässerungselement nach dem erfindungsgemäßen Verfahren hergestellt.

Ein erfindungsgemäßes Inserts ist jedoch auch bei einem anders hergestellten Entwässerungselement erfindungsgemäß einsetzbar, solange dieses zumindest eine erfindungsgemäße Öffnung aufweist.

Das Entwässerungselement besteht bevorzugt aus einem verschleißfesten Kunststoff wie beispielsweise einem glasfaserverstärkter Kunststoff, oder Polyethylen.

Die Erfindung wird an Hand von Zeichnungen veranschaulicht:
- Fig. 1:: Zeigt ein besonders bevorzugtes erfindungsgemäßes Entwässerungselement in seitlicher Schnittansicht mit einem eingesetzt und einem noch einzusetzendem Insert.
- Fig. 2:: Die Fig. 2a, 2b, 2c und 2d zeigen beispielhafte erfindungsgemäße Entwässerungselemente von oben.
- Fig. 3:: Die Fig. 3a, 3b, 3c und 3d zeigen je ein erfindungsgemäßes Insert in seitlicher Schnittansicht und von oben.
- Fig. 4:: Zeigt ein Entwässerungselement mit einem einfach entfernbarem Insert in seitlicher Schnittansicht.
- Fig. 5:: Zeigt ein Entwässerungselement mit Insert in seitlicher Schnittansicht, wobei das Entwässerungselement einen trichterförmigen Einpressbereich aufweist.
- Fig. 6:: Die Fig. 6a und 6b zeigen Entwässerungselemente in seitlicher Teilschnittansicht mit Inserts, welche keine Öffnung aufweisen.
- Fig. 7:: Zeigt ein Entwässerungselement mit einem Insert, welches eine beliebig geformte Deckfläche aufweist, in seitlicher Schnittansicht.
- Fig. 8:: Zeigt ein Entwässerungselement mit einem Insert, dessen Gleitfläche über die Deckfläche des Entwässerungselements vorragt, in seitlicher Schnittansicht.

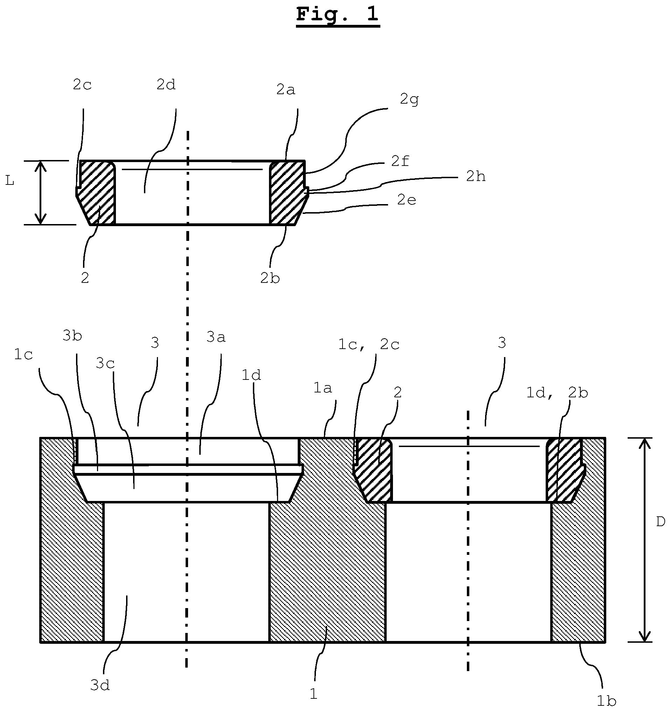

In Fig. 1 ist ein erfindungsgemäßes Entwässerungselement 1 mit zwei Inserts 2 gezeigt, wobei das Entwässerungselement 1 zwei Öffnungen 3 aufweist. Die obere Fläche des Entwässerungselements 1, über welche das Sieb gleitet, wird in Folge als Deckfläche 1a bezeichnet, die untere Fläche, welche dem Inneren des Saugkastens zugewandt liegt, als Grundfläche 1b.

In diesem Beispiel weist die Öffnung 3 in jedem Bereich einen kreisförmigen Querschnitt auf. Zudem sind zwei Inserts 2 gezeigt, wobei eines davon in eine Öffnung 3 eingesetzt ist.

Die Öffnung 3 weist zumindest zwei Bereiche mit unterschiedlichem Durchmesser auf. Im gegenständlichen Beispiel weist die Öffnung 3 vier Bereiche mit unterschiedlichem Durchmesser auf.

Anschließend an die Deckfläche 1a weist die Öffnung 3 einen zylindrischen Bereich auf, welcher als Passung für das Insert 2 dient, dieser Bereich wird in Folge als Passöffnung 3a bezeichnet. Die Passung zwischen Insert 2 und Abdeckelement 1 ist so gewählt, dass ein spaltloser Übergang von der Deckfläche 1a zur Gleitfläche 2a des Inserts 2 erreicht wird.

Im nächsten Abschnitt der Öffnung 3, anschließend an die Passöffnung 3a, folgt ein Bereich mit größerem Durchmesser als jenem der Passöffnung 3a. Dieser Bereich dient zur Aufnahme des Rastelements des Inserts 2 und wird in Folge als Aufnahmeöffnung 3b bezeichnet. Durch die sprunghafte Vergrößerung des Durchmessers von der Passöffnung 3a auf die Aufnahmeöffnung 3b ergibt sich im Abdeckelement 1 eine ringförmige Fläche, welche parallel zur Deckfläche 1a ausgerichtet ist. Diese ringförmige Fläche wird in Folge als Rastfläche 1c bezeichnet. Die Aufnahmeöffnung 3b bildet eine ringsum verlaufende Ausnehmung in der Mantelfläche der Öffnung 3. Diese Ausnehmung ist von der Deckfläche 1a beabstandet.

Die Aufnahmeöffnung 3b geht an ihrem unteren Ende in einen kegelstupfförmigen Bereich 3c der Öffnung 3 über. Dieser kegelstumpfförmige Bereich 3c ist fertigungstechnisch bedingt und ergibt sich bei Verwendung eines kegelstumpfförmigen Fräsers. Wird ein zylindrischer Fräser verwendet, kann dieser Bereich der Öffnung 3 auch zylindrisch geformt sein.

Der kegelstumpfförmige Bereich 3c weist an seinem unteren Ende eine sprunghafte Verkleinerung des Durchmessers auf, wodurch im Entwässerungselement eine ringförmige Auflagefläche 1d gebildet wird, auf welcher das Insert 2 mit seiner unteren Stützfläche 2b aufliegt. Das Insert 2 ist mit seinen Flächen 2c, 2b zwischen den Flächen 1c, 1d des Entwässerungselements so eingepasst, dass keine vertikale Bewegung des Inserts 2 möglich ist.

Am unteren Ende des kegelstumpfförmigen Bereichs 3c schließt die Durchgangsöffnung 3d an, welche sich bis zur Grundfläche 1b des Entwässerungselements 1 erstreckt.

Das Insert 2 weist in etwa eine hohlzylindrische Form auf, mit einem im Wesentlichen konstanten Innendurchmesser der Insertöffnung 2d. Das Insert 2 weist bevorzugt an der oberen Kante der Insertöffnung 2d eine Rundung oder eine Phase auf. Die Deckfläche des Hohlzylinders des Inserts 2, über welche das Sieb gleitet, wird in Folge als Gleitfläche 2a bezeichnet, die Grundfläche des Hohlzylinders, welche auf der Auflagefläche 1d aufliegt als Stützfläche 2b. Die Stützfläche 2b weist einen geringeren Außendurchmesser auf als die Öffnung 3a.

An die Stützfläche 2b schließt eine Einpressfase, bzw. der Einpresskegel 2e an, bei welchem der Außendurchmesser des Inserts 2 kontinuierlich größer wird, bis dessen Durchmesser den Durchmesser der Passöffnung 3a etwas übersteigt. An den Einpresskegel 2e schließt ein kurzer Bereich 2f mit konstantem Durchmesser an, welcher schließlich sprunghaft zum Passabschnitt 2g übergeht und so einen ringförmige Sperrfläche 2c bildet, welche parallel zur Gleitfläche 2a und parallel zur Stützfläche 2b ausgerichtet ist.

Beim Einsetzen des Inserts 2 lässt sich dessen Einpresskegel 2e zunächst leicht in die Öffnung 3a einführen, bis dessen Durchmesser den der Öffnung 3a übersteigt. Die benötigte Kraft zum Einpressen nimmt dann kontinuierlich zu, bis der kurze Bereich 2f die Passöffnung 3a erreicht und entlang dieser mit gleichbleibender Kraft nach unten geschoben wird. Sobald der kurze Bereich 2f die Passöffnung 3a passiert hat, gelangt der kurze Bereich 2f in die Aufnahmeöffnung 3b, die den gleichen oder etwas größeren Durchmesser wie der kurze Bereich 2f aufweist. In dieser Position ist das Insert vertikal durch die Flächen 2c, 2b und horizontal durch den Passabschnitt 2g in die Öffnung 3 eingepasst, wodurch eine vertikale oder horizontale Bewegung des Inserts 2 verhindert wird. Die Sperrfläche 2c und der über den Passabschnitt 2g vorstehende Teil des kurzen Bereichs 2f und des Einpresskegels 2e formen den Sperrvorsprung 2h.

Der Sperrvorsprung 2h kann sich, wie zuvor beschrieben, über den gesamten Umfang des Inserts 2 erstrecken, oder nur über einen oder mehrere Teilbereiche des Umfangs des Inserts 2. Gleiches gilt für die Aufnahmeöffnung 3b.

Der Innendurchmesser des Inserts 2 beträgt beispielsweise 14 mm, der Außendurchmesser ca. 20 mm. Die Dicke D des Entwässerungselements 1 beträgt beispielsweise 40 mm. Die Länge L des Inserts beträgt beispielsweise ca. 7 mm. Die Breite der ringförmigen Sperrfläche 2c beträgt zirka 0,5 mm. Die Breite der ringförmigen Sperrfläche 2c ist dabei von der Elastizität bzw. der Härte des Kunststoffs des Entwässerungselements 1 abhängig. Je härter der Kunststoff ist desto geringer kann die Breite der Sperrfläche 2c dimensioniert werden.

Das Entwässerungselement 1 kann im Langzeitsinterpressverfahren als bis zu 12 m langer Belag oder Leiste ohne Schweißnaht, mit spannungsfreier Struktur hergestellt werden. Die Breite eines Entwässerungselements 1 mit sieben parallelen Reihen von Öffnungen 3 beträgt beispielsweise 220 mm. Die Breite des Entwässerungselements 1 ist die Erstreckung des Entwässerungselements 1 in Laufrichtung des Siebes. Die Breite eines Entwässerungselements 1 kann auch größer (oder kleiner) gewählt sein, beispielsweise beträgt die Breite über 500 mm, wobei die Unterstützung durch den Unterbau in einem Raster von ca. 250 mm auszuführen ist. Diese Unterstützung besteht in einer Befestigung des Entwässerungselements 1, die so auszulegen ist, dass sich das Entwässerungselement 1 ungehindert ausdehnen kann (T-Schienen, Winkelleisten, Schwalbenschwanzführungen, Schrauben in Langlöcher).

Erfindungsgemäß ist es auch denkbar, dass das Entwässerungselement 1 nicht aus einer durchgehenden Platte gefertigt ist, sondern aus mehreren in erfindungsgemäßer Weise gefertigten Platten bzw. Entwässerungselementen 1 besteht, welche miteinander verschweißt werden, oder aneinander folgend in Längs- oder Querrichtung der Laufrichtung des Siebes aneinander folgend montiert werden. Beispielsweise deckt dann ein erfindungsgemäßes Entwässerungselement 1 nur einen Teilbereich der Breite des Siebes ab. Ein erfindungsgemäße Entwässerungselement 1 selbst kann eine beliebige Form aufweisen, wobei die Form einer rechteckigen Platte in den meisten Fällen vorteilhaft sein wird.

Der Widerstand, welchen das Insert 2 gegen das Herausziehen aus dem Entwässerungselement 1 aufbringt, kann über die Breite der ringförmigen Sperrfläche 2c und/ oder deren Neigung zur Deckfläche 1a, bzw. der Gleitfläche 2a eingestellt werden. Wobei eine Änderung der Neigung der Sperrfläche 2c keinen Einfluss auf die nötige Einpresskraft zum Einsetzen des Inserts 2 hat.

Ist die Sperrfläche 2c ausgehend von ihrer gemeinsamen Kante mit dem Passzylinder 2g zur Deckfläche 1a hin geneigt, so bildet der Sperrvorsprung 2h einen Widerhaken. Dieser verhakt sich beim Versuch das Insert 2 herauszuziehen im Kunststoff des Entwässerungselements 1. Ein zerstörungsfreies Entfernen des Inserts 2 ist dann nicht möglich.

Ist die Sperrfläche 2c ausgehend von ihrer gemeinsamen Kante mit dem Passzylinder 2g von der Deckfläche 1a weg geneigt, so bildet die Sperrfläche 2c ein kegelstumpfförmigen Sperrvorsprung 2h. Weist dieser Kegelstumpf beispielsweise die gleiche Neigung wie der Einpresskegel 2e auf, so ist für das Herausziehen die gleiche Kraft notwendig wie für das Einpressen des Inserts 2. Ein solches Insert 2 kann bei Bedarf jederzeit zerstörungsfrei entfernt und durch ein neues Insert 2 ersetzt werden, oder bei einem anderen Entwässerungselement 1 eingesetzt werden.

Durch die Erfindung ist es auch möglich bereits in Verwendung befindliche Voll-Kunststoff-Entwässerungselemente nachträglich mit Inserts 2 zu versehen, durch Bohren oder Fräsen der Passöffnung 3a und Fräsen der Aufnahmeöffnungen 3b.

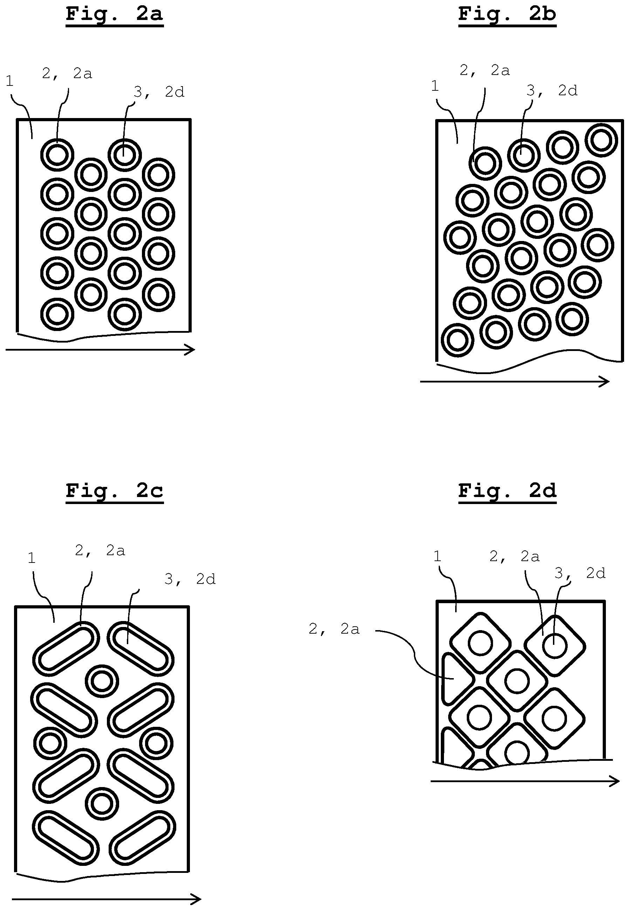

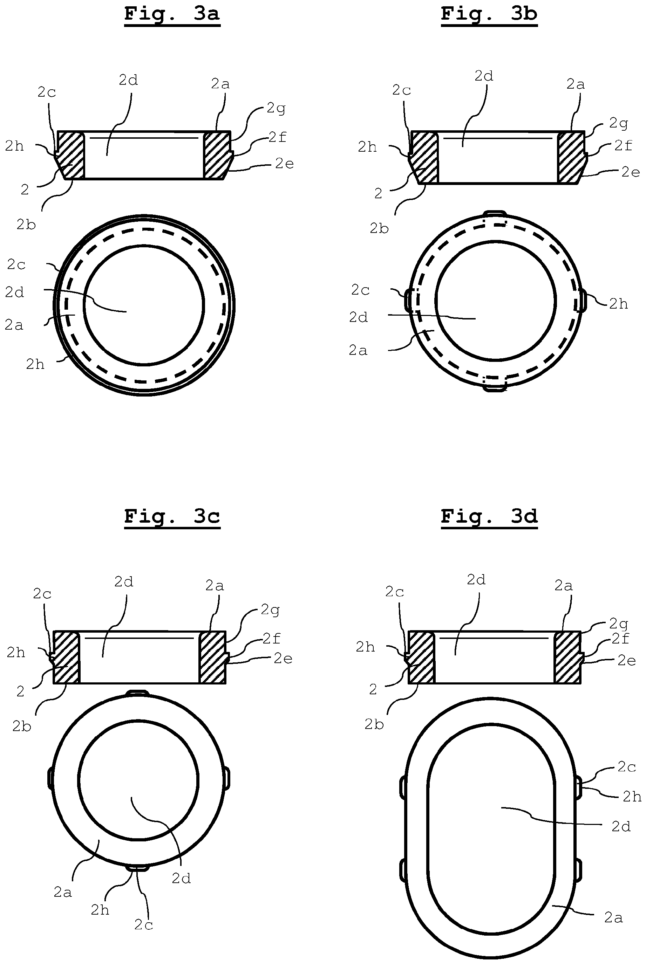

In Fig. 2a, Fig. 2b, Fig. 2c und Fig. 2d sind erfindungsgemäße Entwässerungselemente 1 von oben gezeigt, deren Öffnungen 3 mit Inserts 2 versehen sind. Das Entwässerungselement 1 weist dabei zumindest eine Reihe von Öffnungen 3 auf. Bevorzugt weist es jedoch mehrere Reihen von Öffnungen 3 auf, wobei die Öffnungen 3 der aufeinanderfolgenden Reihen versetzt zueinander angeordnet sind wie in Fig. 2a gezeigt. In Fig. 2a verlaufen die Reihen in einem Winkel von 90° zur Laufrichtung des Siebes, welche mit dem Pfeil angedeutet ist. Wie in Fig. 2b gezeigt können die Reihen auch schräg zur Laufrichtung des Siebes verlaufen. Die in Fig. 2a und 2b gezeigten Öffnungen 3 und Inserts 2 weisen kreisförmige Querschnitte auf. Die Inserts 2 können gemäß einem der Ausführungsbeispiele der Fig. 3a, Fig. 3b und Fig. 3c ausgeführt sein. Das Insert 2 der Fig. 3a weist einen über den gesamten Umfang verlaufenden Sperrvorsprung 2h auf, wodurch sich eine ringförmige Sperrfläche 2c ergibt. Die Inserts 2 der Fig. 3b und Fig. 3c, weisen vier Sperrvorsprünge 2c auf, die in regelmäßigen Abständen über den Umfang des Inserts 2 verteilt sind. Die Inserts 2 der Fig. 3a und Fig. 3b weisen einen Einpresskegel 2e auf.

Das Insert 2 der Fig. 3c weist einen im Wesentlichen konstanten ringförmigen Querschnitt auf, von welchem die Sperrvorsprünge 2c abstehen. Die Sperrvorsprünge 2c weisen an ihrem unteren Ende einen sich radial verjüngenden Bereich auf, welcher die Funktion des Einpresskegels 2e übernimmt. Natürlich wäre es auch denkbar einen über den gesamten Umfang verlaufenden Sperrvorsprung 2h in dieser Weise auszuführen, also mit einem zur Stützfläche 2b beabstandeten Einpresskegel 2e.

Die Öffnungen 3 können auch in anderen Mustern über das Entwässerungselement 1 verteilt angeordnet sein, wie in Fig. 2c gezeigt. Dabei können unterschiedlich geformte Öffnungen 3 und Inserts 2 zum Einsatz kommen. Wie in Fig. 2c gezeigt, kann die Öffnung 3 als Langloch ausgeführt sein, wobei das Insert 2 eine längsovale Form aufweist. Die Ausführung eines längsovalen Inserts 2 ist in Fig. 3d gezeigt. Besonders bei von der Kreisform, bzw. Ringform abweichenden Querschnitten des Inserts 2 ist es vorteilhaft, mehrere Sperrvorsprünge 2h über den Umfang des Inserts 2 verteilt anzuordnen. In diesem Fall ist es ausreichend, den Querschnitt der Öffnung 3 nur in jenen Bereichen größer auszuführen, in welchen die Sperrvorsprünge 2h im eingesetzten Zustand zur Lage kommen.

Wie in Fig. 2d gezeigt können die Inserts 2 auch eine beliebig geformte Gleitfläche 2a aufweisen. Das Insert 2 am linken Rand des Entwässerungselements 1 weist eine dreieckige Form auf und besitzt keine Insertöffnung 2d. Solche Inserts 2 ohne Insertöffnung 2d sind in Laufrichtung des Siebes gesehen, bevorzugt entlang der vorderen und/oder hinteren Kante des Entwässerungselements 1 vorgesehen, da an den Kanten größerer Verschleiß auftritt als im Bereich zwischen den Kanten. Durch den Verschleiß runden die Kanten allmählich ab. Dadurch, dass die Inserts 2 etwas beabstandet zur Kante des Entwässerungselements 1 angebracht sind, wird das Ausmaß der Rundung durch den Abstand des Inserts 2 von der Kante begrenzt.

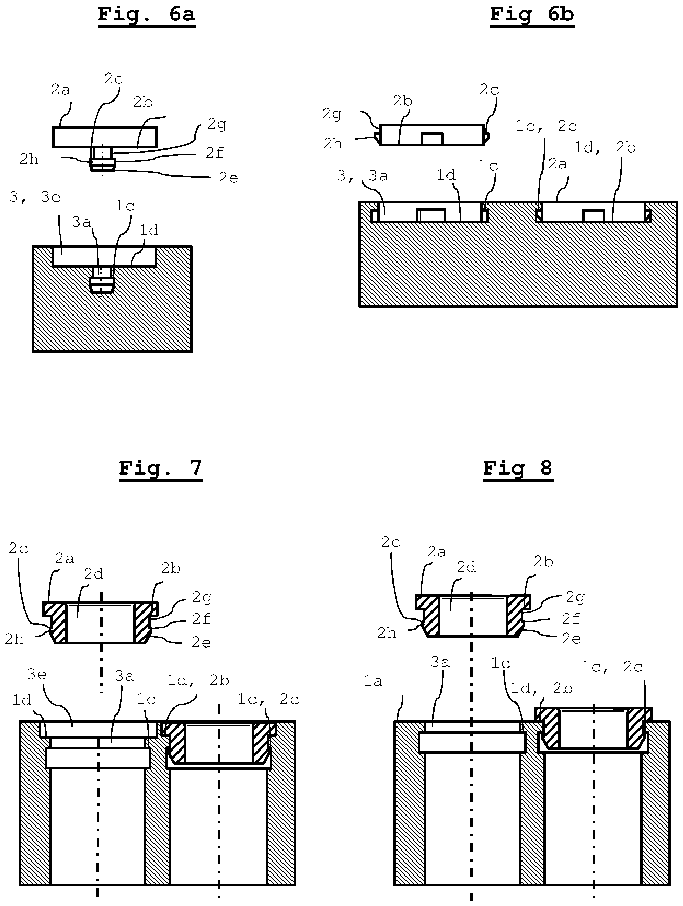

Die Inserts 2 ohne Insertöffnung 2d können gemäß den Fig. 6a und Fig. 6b ausgeführt sein. In Fig. 6a ist das Insert 2 an seinem unteren Ende mit einem, einen Einpresskegel 2e aufweisenden, zylinderförmigen Passabschnitt 2g versehen. Dieser unter Teil des Inserts 2 kann wie das Insert 2 der Fig. 1, Fig. 3a, Fig. 3b, Fig. 3c, Fig. 4 und Fig. 5 ausgebildet sein, wobei keine Insertöffnung 2d vorhanden ist. Der an diesen untern Abschnitt anschließende, plattenförmige obere Abschnitt kann eine beliebige Querschnittsform aufweisen, beispielsweise dreieckig wie in Fig. 2d gezeigt. Dieser obere Abschnitt kann bevorzugt in einen entsprechend gleich geformten Einsetzabschnitt 3e der Öffnung 3 eingesetzt werden, oder auch analog zur Fig. 8 über die Deckfläche 1a vorstehen.

In Fig. 6b ist eine weitere Variante des Inserts 2 ohne Insertöffnung 2d gezeigt. Dabei ist der plattenförmige Abschnitt selbst der Passabschnitt 2g, welcher in die entsprechend gleich geformte Passöffnung 3a eingesetzt wird. Vom Umfang des plattenförmigen Abschnitts stehen ein oder mehrere Sperrvorsprünge 2c ab, welche in entsprechenden Ausnehmungen in der Mantelfläche der Öffnung 3 einrasten. Als Abwandlung ist es denkbar das Insert 2 der Fig. 6b mit einer oder mehreren beliebig geformten Instertöffnungen 2d zu versehen und das Entwässerungselement 1 mit einer Durchgangsöffnung 3d zu versehen.

In Fig. 2d sind neben den Inserts 2 ohne Insertöffnung 2d auch Inserts 2 gezeigt, die eine zylinderförmige Insertöffnung 2d aufweisen und eine beliebig geformte Gleitfläche 2a.

Die Gleitflächen 2a aller Inserts 2 sind in Fig. 2d mit abgerundeten Ecken ausgeführt, dies ergibt sich in Zusammenhang mit der spanenden Erzeugung der Öffnungen 3, bei welcher die Radien durch die Größe des Fräsers vorgegeben sind. Die Inserts 2 mit annähernd quadratischen Gleitflächen 2a können vorteilhaft gemäß Fig. 7 oder Fig. 8 geformt sein. Die Inserts weisen dabei einen unteren Abschnitt auf, welcher wie ein in den Fig. 1, Fig. 3a, Fig. 3b, Fig. 3c, Fig. 4 gezeigtes Insert 2 ausgeführt sein kann. An den Passabschnitt 2g schließt jedoch noch oben hin ein plattenförmiger Abschnitt an, welcher einen beliebigen Querschnitt aufweisen kann und die Gleitfläche 2a des Inserts 2 bildet.

Wie in Fig. 7 gezeigt, weist die Öffnung 3 bevorzugt von der Passöffnung 3a bis zur Deckfläche 1a eine Einsatzöffnung 3e auf, welche zur Aufnahme des plattenförmigen Abschnitts des Inserts 2 dient. Die untere Fläche des plattenförmigen Abschnitts bildet die Stützfläche 2b, welche auf der Auflagefläche 1d des Entwässerungselements 1 aufliegt. Im Gegensatz zu den Inserts 2 der Fig. 1 befindet sich die Stützfläche 2b oberhalb der Sperrfläche 2c.

Wie in Fig. 8 gezeigt, kann das Insert 2 auch so eingesetzt werden, dass der obere plattenförmige Abschnitt über die Deckfläche 1a vorsteht. In diesem Fall ist die Deckfläche 1a zugleich die Auflagefläche 1d. In Abwandlung des Inserts der Fig. 8 wäre es denkbar, den oberen Abschnitt nicht plattenförmig sondern als Kugelsegment auszuführen.

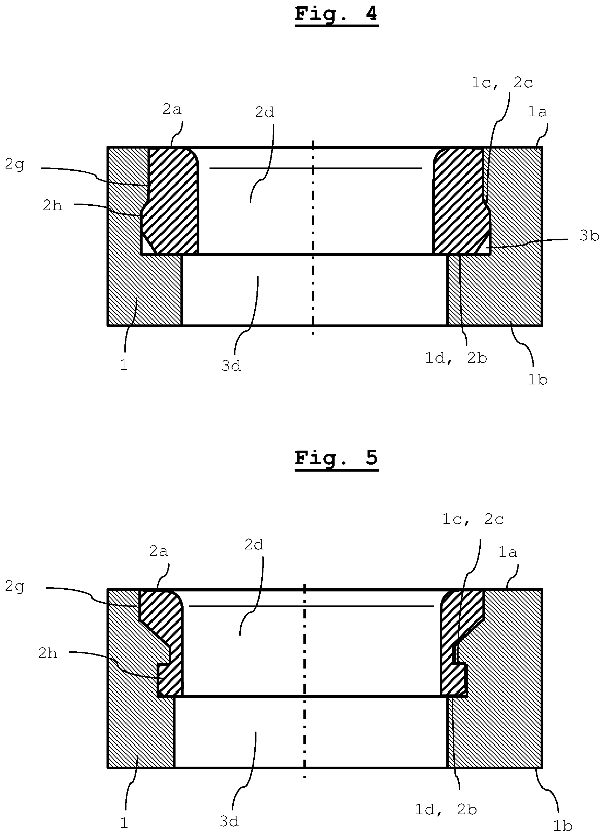

In Fig. 4 ist eine bevorzugt Ausgestaltung der Rastfläche 1c und der Sperrfläche 2c gezeigt. Die Sperrfläche 2c des Rastelements 2h ist dabei ausgehend vom Passabschnitt 2g von der Gleitfläche 2a weg geneigt und liegt im eingesetzten Zustand deckungsgleich an der Rastfläche 1c an. Mit einem geeignetem Werkzeug, welches von oben durch die Öffnung 2d bewegt und an dem über die Auflagefläche 1d vorstehenden Teil der Stützfläche 2b angesetzt wird, kann das Insert 2 von oben aus der Öffnung 3 gezogen werden. Der Widerstand gegen das Herausziehen hängt von der Neigung der Sperrfläche 2c ab.

In Fig. 5 ist eine Ausgestaltung des Inserts 2 und der Öffnung 3 gezeigt, bei welcher das Insert 2 keinen Einpresskegel 2e aufzuweisen braucht, da die Öffnung 3 einen trichterförmigen Bereich aufweist, welcher das Einpressen des Inserts 2 begünstigt.

In der Figurenbeschreibung wurden vorteilhaft Merkmale der Erfindung beschrieben, diese können im Rahmen des fachmännischen Handelns beliebig kombiniert werden und es können auch unterschiedlich ausgestaltete Inserts 2 an einem Entwässerungselement 1 vorhanden sein.

## Patentansprüche

1. Entwässerungselement (1) aus Kunststoff, welches zumindest eine Öffnung (3) aufweist, in welche ein Insert (2) eingesetzt ist, wobei das Insert (2) gegenüber dem Entwässerungselement (1) eine härtere Oberfläche aufweist, **dadurch gekennzeichnet, dass**
das Insert (2) an seinem Außenumfang zumindest einen Sperrvorsprung (2h) mit einer Sperrfläche (2c) aufweist,
das Entwässerungselement (1) in der Öffnung (3) zumindest eine Rastfläche (1c) aufweist, welche durch eine Ausnehmung in der Mantelfläche der Öffnung (3) gebildet ist,
das Insert (2) in die Öffnung (3) einpressbar ist,
wobei der Sperrvorsprung (2h) in die Ausnehmung in der Mantelfläche der Öffnung (3) ragt und die Sperrfläche (2c) des Sperrvorsprungs (2h) aus jener Richtung in Eingriff mit der Rastfläche (1c) ist, welche entgegengesetzt der Richtung liegt, aus welcher das Insert (2) in die Öffnung (3) eingepresst wurde.

2. Entwässerungselement (1) nach Anspruch 1, **dadurch gekennzeichnet, dass** das Entwässerungselement (1) eine Auflagefläche (1d) aufweist und eine Stützfläche (2b) des Inserts (2) in jener Richtung in Eingriff mit der Auflagefläche (1d) ist, in der das Insert (2) in die Öffnung (3) eingepresst wurde.

3. Entwässerungselement (1) nach einem der Ansprüche 1 und 2, **dadurch gekennzeichnet, dass** die Öffnung (3) eine Passöffnung (3a) aufweist, in welche das Insert (2) im eingesetzten Zustand mit dem Passabschnitt (2g) eingepasst und gegen horizontale Bewegung gesichert ist.

4. Entwässerungselement (1) nach Anspruch 3, **dadurch gekennzeichnet, dass** der Passabschnitt (2g) des Inserts (2) eine zylindrische Form aufweist.

5. Entwässerungselement (1) nach einem der Ansprüche 3 bis 4, **dadurch gekennzeichnet, dass** das Insert (2) anschließend an den Passabschnitt (2g) in Richtung der Gleitfläche (2a) einen Bereich aufweist, welcher gegenüber dem Passabschnitt (2g) einen größeren, beliebig geformten Querschnitt aufweist.

6. Entwässerungselement (1) nach einem der Ansprüche 1 bis 5, **dadurch gekennzeichnet, dass** die Gleitfläche (2a) des Inserts (2) und die Deckfläche (1a) des Entwässerungselements (1) in einer Ebene liegen.

7. Entwässerungselement (1) nach einem der Ansprüche 1 bis 6, **dadurch gekennzeichnet, dass** die Öffnung (3) von der Deckfläche (1a) des Entwässerungselements (1) bis zur Grundfläche (1b) des Entwässerungselements (1) verläuft und dass das Insert (2) eine Insertöffnung (2d) aufweist, welche sich ausgehend von der Gleitfläche (2a) über die gesamte Länge L des Inserts (2) erstreckt.

8. Entwässerungselement (1) nach einem der Ansprüche 1 bis 7, **dadurch gekennzeichnet, dass** die Öffnung (3) des Entwässerungselements (1) und das Insert (2) nur kreis- oder ringförmige Querschnitte aufweisen.

9. Entwässerungselement (1) nach einem der Ansprüche 1 bis 8, **dadurch gekennzeichnet, dass** der zumindest eine Sperrvorsprung (2h) an seiner von der Gleitfläche (2a) und der Sperrfläche (2c) abgewandt liegenden Seite einen konischen bzw. einen sich verjüngenden Abschnitt aufweist.

10. Entwässerungselement (1) nach einem der Ansprüche 1 bis 9, **dadurch gekennzeichnet, dass** die Sperrfläche (2c) des Inserts (2) zur Gleitfläche (2a) hin oder von dieser weg geneigt ausgerichtet ist.

11. Entwässerungselement (1) nach einem der Ansprüche 1 bis 10, **dadurch gekennzeichnet, dass** der Sperrvorsprung (2h) über den gesamten Umfang des Inserts (2) verläuft und sich die Ausnehmung in der Mantelfläche der Öffnung (3) über den gesamten Umfang der Öffnung (3) erstreckt.

12. Entwässerungselement (1) nach einem der Ansprüche 1 bis 11, **dadurch gekennzeichnet, dass** das Insert (2) an seiner von der Gleitfläche (2a) abgewandten Seite einen kegelstumpfförmigen Bereich, der als Einpresskegel (2e) dient, aufweist.

13. Entwässerungselement (1) nach einem der Ansprüche 1 bis 12, **dadurch gekennzeichnet, dass** die Gleitfläche (2a) des Inserts durch Keramik gebildet ist, oder das Insert (2) zur Gänze aus Keramik besteht.

14. Entwässerungselement (1) nach einem der Ansprüche 1 bis 13, **dadurch gekennzeichnet, dass** es zur Gänze aus verschleißfestem Kunststoff, insbesondere ultrahochmolekularem Polyethylen besteht.

15. Verfahren zur Herstellung eines Entwässerungselements (1) gemäß einem der Ansprüche 1 bis 14, **dadurch gekennzeichnet, dass**
das Entwässerungselement (1) in Form einer durchgehenden Platte aus Kunststoff hergestellt, insbesondere aus ultrahochmolekularem Polyethylen gesintert wird,
das Entwässerungselement (1) danach mit spanenden Bearbeitungsverfahren mit Öffnungen (3) versehen wird,
Inserts (2) mit einer härteren, verschleißfesteren Oberfläche, insbesondere Keramikinserts, in die Öffnungen (3) eingepresst werden.

## Claims

1. Drainage element (1) made of plastic which has at least one opening (3) in which an insert (2) is seated, wherein the insert (2) has a harder surface compared to the drainage element (1), **characterised in that**
the insert (2) has at least one locking protrusion (2h) with a locking surface (2c),
the drainage element (1) has at least one latching surface (1c) in the opening (3), which is formed by a recess in the lateral surface of the opening (3),
the insert (2) can be pressed into the opening (3),
wherein the locking protrusion (2h) protrudes into the recess of the lateral surface of the opening (3) and the locking surface (2c) of the locking protrusion (2h) interlocks with the latching surface (1c) from the direction that goes in the opposite direction, from which the insert (2) has been pressed into the opening (3).

2. Drainage element (1) according to claim 1, **characterised in that** the drainage element (1) has a bearing surface (1d) and a supporting surface (2b) of the insert (2) interlocks with the bearing surface (1d) in the direction, in which the insert (2) has been pressed into the opening (3).

3. Drainage element (1) according to one of the claims 1 and 2, **characterised in that** the opening (3) has a form-fit opening (3a) into which the insert (2) with the form-fit section (2g) is pressed in the inserted condition and secured against horizontal movement.

4. Drainage element (1) according to claim 3, **characterised in that** the form-fit section (2g) of the insert (2) has a cylindrical shape.

5. Drainage element (1) according to one of the claims 3 to 4, **characterised in that** the insert (2) has an area connected to the form-fit section (2g) in the direction of the sliding surface (2a), which has a larger cross-section compared to the form-fit section (2g) with an optional shape.

6. Drainage element (1) according to one of the claims 1 to 5, **characterised in that** the sliding surface (2a) of the insert (2) and the cover surface (1a) of the drainage element (1) are arranged on one plane.

7. Drainage element (1) according to one of the claims 1 to 6, **characterised in that** the opening (3) extends from the cover surface (1a) of the drainage element (1) to the base area (1b) of the drainage element (1) and that the insert (2) has an insert opening (2d), which extends starting from the sliding surface (2a) across the entire length L of the insert (2).

8. Drainage element (1) according to one of the claims 1 to 7, **characterised in that** the opening (3) of the drainage element (1) and the insert (2) have exclusively circular or ringshaped cross-sections.

9. Drainage element (1) according to one of the claims 1 to 8, **characterised in that** at least one locking protrusion (2h) has a conical or tempered section on its side that faces away from the sliding surface (2a) and the locking surface (2c).

10. Drainage element (1) according to one of the claims 1 to 9, **characterised in that** the locking surface (2c) of the insert (2) is aligned tilted towards or away from the sliding surface (2a).

11. Drainage element (1) according to one of the claims 1 to 10, **characterised in that** the locking protrusion (2h) extends across the entire circumference of the insert (2) and the recess in the lateral surface of the opening (3) extends across the entire circumference of the opening (3).

12. Drainage element (1) according to one of the claims 1 to 11, **characterised in that** the insert (2) has an area in the shape of a truncated cone that faces away from the sliding surface (2a) and serves as a press-in cone (2e).

13. Drainage element (1) according to one of the claims 1 to 12, **characterised in that** the sliding surface (2a) of the insert is made of ceramics or the insert (2) is made fully of ceramics.

14. Drainage element (1) according to one of the claims 1 to 13, **characterised in that** it is made fully of wear-resistant plastic, more specifically of ultra high molecular polyethylene.

15. Method to produce a drainage element (1) according to one of the claims 1 to 14, **characterised in that**
the drainage element (1) is produced as a continuous plate made of plastic, in particular it is sintered of ultra high molecular polyethylene,
the drainage element (1) is thereafter fitted with openings (3) in a machining process,
inserts (2) with a harder, more wear-resistant surface, in particular ceramics inserts, are pressed into the openings (3).

## Revendications

1. Elément de déshydratation (1) en matière plastique présentant au moins une ouverture (3) dans laquelle est placé un insert (2), l'insert (2) présentant une surface plus dure que celle de l'élément de déshydratation (1), **caractérisé en ce que**
l'insert (2) présente sur sa périphérie extérieure au moins une saillie d'arrêt (2h) dotée d'une surface d'arrêt (2c),
l'élément de déshydratation (1) présente dans l'ouverture (3) au moins une surface d'encliquetage (1c) qui est formée par un évidement dans la surface enveloppante de l'ouverture (3),
l'insert (2) peut être enfoncé dans l'ouverture (3),
la saillie d'arrêt (2h) dépassant dans l'évidement dans la surface enveloppante de l'ouverture (3) et la surface d'arrêt (2c) de la saillie d'arrêt (2h) étant en prise avec la surface d'encliquetage (1c) dans une direction opposée à la direction à partir de laquelle l'insert (2) a été enfoncé dans l'ouverture (3).

2. Elément de déshydratation (1) selon la revendication 1, **caractérisé en ce que** l'élément de déshydratation (1) présente une surface d'appui (1d) et est une surface de support (2d) de l'insert (2) dans la direction en prise avec la surface d'appui (1d) dans laquelle l'insert (2) a été enfoncé dans l'ouverture (3).

3. Elément de déshydratation (1) selon l'une des revendications 1 ou 2, **caractérisé en ce que** l'ouverture (3) présente une ouverture d'ajustage (3a), dans laquelle l'insert (2), à l'état inséré, est ajusté avec la section d'ajustage (2g) et est protégé contre tout mouvement horizontal.

4. Elément de déshydratation (1) selon la revendication 3, **caractérisé en ce que** la section d'ajustage (2g) de l'insert (2) présente une forme cylindrique.

5. Elément de déshydratation (1) selon l'une des revendications 3 à 4, **caractérisé en ce que** l'insert (2) présente, à la suite de la section d'ajustage (2g) en direction de la surface de glissement (2a), une zone qui présente une section transversale de forme quelconque plus grande que celle de la section d'ajustage (2g).

6. Elément de déshydratation (1) selon l'une des revendications 1 à 5, **caractérisé en ce que** la surface de glissement (2a) de l'insert (2) et la surface supérieure (1a) de l'élément de déshydratation (1) se trouvent dans un plan.

7. Elément de déshydratation (1) selon l'une des revendications 1 à 6, **caractérisé en ce que** l'ouverture (3) s'étend depuis la surface supérieure (1a) de l'élément de déshydratation (1) jusqu'à la base (1b) de l'élément de déshydratation (1) et **en ce que** l'insert (2) présente une ouverture d'insert (2d) qui s'étend depuis la surface de glissement (2a) sur toute la longueur L de l'insert (2).

8. Elément de déshydratation (1) selon l'une des revendications 1 à 7, **caractérisé en ce que** l'ouverture (3) de l'élément de déshydratation (1) et l'insert (2) présentent uniquement des sections transversales circulaires ou annulaires.

9. Elément de déshydratation (1) selon l'une des revendications 1 à 8, **caractérisé en ce que** la au moins une saille d'arrêt (2h), sur son côté orienté à l'opposé de la surface de glissement (2a) et de la surface d'arrêt (2c), présente une section conique, une section qui se rétrécit.

10. Elément de déshydratation (1) selon l'une des revendications 1 à 9, **caractérisé en ce que** la surface d'arrêt (2c) de l'insert (2) est alignée inclinée par rapport à la surface de glissement (2a) vers ou en s'éloignant de celle-ci.

11. Elément de déshydratation (1) selon l'une des revendications 1 à 10, **caractérisé en ce que** la saille d'arrêt (2h) s'étend sur tout le pourtour de l'insert (2) et **en ce que** l'évidement dans la surface enveloppante de l'ouverture (3) s'étend sur tout le pourtour de l'ouverture (3).

12. Elément de déshydratation (1) selon l'une des revendications 1 à 11, **caractérisé en ce que** l'insert (2) présente, sur son côté orienté à l'opposé de la surface de glissement (2a), une zone conique qui sert de cône d'enfoncement (2e).

13. Elément de déshydratation (1) selon l'une des revendications 1 à 12, **caractérisé en ce que** la surface de glissement (2a) de l'insert est constituée de céramique ou **en ce que** l'insert (2) est constitué entièrement de céramique.

14. Elément de déshydratation (1) selon l'une des revendications 1 à 13, **caractérisé en ce qu'**il est constitué entièrement de plastique résistant à l'usure, en particulier de polyéthylène à poids moléculaire ultra-élevé.

15. Procédé pour fabriquer un élément de déshydratation (1) selon l'une des revendications 1 à 14, **caractérisé en ce que** l'élément de déshydratation (1) est fabriqué en plastique sous la forme d'un plateau continu, en particulier fritté à partir de polyéthylène à poids moléculaire ultra-élevé, l'élément de déshydratation (1) est ensuite pourvu d'ouvertures (3) par le biais d'un procédé d'usinage par enlèvement de copeaux,
Les inserts (2) avec une surface plus dure résistante à l'usure, en particulier les inserts en céramique, sont enfoncés dans les ouvertures (3).
